# EUROPEAN PATENT SPECIFICATION

(11) **EP 3 668 170 B1**
(45) Date of publication and mention of the grant of the patent: **17.12.2025**
(21) Application number: 17920634.7
(22) Date of filing: 10.08.2017
(51) Int. Cl.: H04W 28/06, H04W 72/04, H04W 52/14, H04L 5/00, H04W 52/36, H04W 72/12, H04J 1/00

(54) **USER TERMINAL AND RADIO COMMUNICATION METHOD**
BENUTZERENDGERÄT UND FUNKKOMMUNIKATIONSVERFAHREN
TERMINAL UTILISATEUR ET PROCÉDÉ DE COMMUNICATION RADIO

(43) Date of publication of application: 17.06.2020
(73) Proprietor: NTT DOCOMO, INC., Chiyoda-ku Tokyo 100-6150 (JP)
(72) Inventor: TAKEDA, Kazuaki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/029225
(87) International publication number: WO 2019/030931

(56) References cited:
- JP-A- 2017 085 652
- JP-A- 2017 511 030
- US-A1- 2013 064 165
- US-A1- 2014 153 506
- CMCC: "System Information for supporting the supplementary uplink (SUL", 3GPP TSG-RAN WG2 NR ADHOC R2-1707461, 23 June 2017 (2017-06-23), XP051307490, Retrieved from the Internet <URL:http://www.3gpp.org/ftp/tsg_ran/WG2_RL2/TSGR2_AHs/2017_06_NR/Docs/R2-1707461.zip> [retrieved on 20170926]
- LG ELECTRONICS: "Remaining details on UL sharing between LTE and NR", 3GPP TSG RAN WG1 MEETING AD-HOC R1-1710354, 17 June 2017 (2017-06-17), XP051304975, Retrieved from the Internet <URL:http://www.3gpp.org/ftp/tsg_ran/WG1_RL1/TSGR1_AH/NR_AH_1706/Docs/R1-1710354.zip> [retrieved on 20170926]

## Description

### Technical Field

The present invention relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). In addition, for the purpose of achieving a wider bandwidth and a higher speed in comparison to LTE, succeeding systems of LTE (also referred to as, for example, LTE-A (LTE-Advanced), FRA (Future Radio Access), 4G, 5G, 5G+ (plus), NR (New RAT (New Radio Access Technology)), LTE Rel. 14, Rel. 15 or later, and so on) are also under study.

In the existing LTE systems (for example, LTE Rel. 10 or later), carrier aggregation (CA), which allows aggregation of a plurality of carriers (component carriers (CCs), cells), is introduced in order to achieve a wider bandwidth. Each carrier is configured with a system band of LTE Rel. 8 being one unit. Further, in CA, a plurality of CCs of one radio base station (eNB (eNodeB)) are configured for a user terminal (UE (User Equipment)).

Further, in the existing LTE systems (for example, LTE Rel. 12 or later), dual connectivity (DC), in which a plurality of cell groups (CGs) of different radio base stations are configured for a user terminal, is also introduced. Each cell group is constituted with at least one carrier (also referred to as a CC, a cell, or the like). DC is also referred to as inter-base station CA (Inter-eNB CA) and so on, since a plurality of carriers of different radio base stations are aggregated.

Document US 2014/0153506 relates to a method of processing a control channel at a user equipment in a wireless communication system using multiple carriers.

### Citation List

### Non-Patent Literature

[Non-Patent Literature 1]3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Future radio communication systems (for example, 5G, NR, and so on) employ radio access technologies (RATs) (also referred to as 5G, NR, the second RAT, or the like) that are different from the existing RATs (also referred to as LTE, the first RAT, or the like). It is assumed that the operation modes of the future radio communication systems include a standalone mode, which allows independent operation without cooperation with the existing RAT, and a non-standalone (NSA) mode, which allows operation in cooperation with the existing RAT.

Further, in the future radio communication systems, communication using a plurality of carriers including a carrier specialized for UL transmission (on which only UL transmission is performed) is under study. Such a mode in which only UL transmission is performed is also referred to as an SUL (Supplemental UpLink).

However, a DL signal is not transmitted on the SUL carrier. Therefore, how to control UL signal transmission (for example, scheduling and so on) on the SUL carrier has been posing a problem.

The present invention is made in view of the above, and has one object to provide a user terminal and a radio communication method that enable appropriate control of UL transmission on an SUL (Supplemental UpLink) carrier when the SUL carrier is used. Solution to Problem

The invention is set out in the appended set of claims.

### Advantageous Effects of Invention

According to the present invention, UL transmission on an SUL (Supplemental UpLink) carrier can be appropriately controlled when the SUL carrier is used.

### Brief Description of Drawings

FIG. 1A and FIG. 1B are each a diagram to show an example when communication is performed with a plurality of carriers including an SUL carrier;
FIG. 2 is a diagram to show an example when UL transmission is performed on the SUL carrier by using cross-carrier scheduling;
FIG. 3 is a diagram to show an example of configuration of a control resource set, when UL transmission is performed on the SUL carrier by using cross-carrier scheduling;
FIG. 4 is a diagram to show an example of a UCI transmission scheme, when UL transmission is performed on the SUL carrier by using cross-carrier scheduling;
FIG. 5 is a diagram to show an example of a schematic structure of a radio communication system according to the present embodiment;
FIG. 6 is a diagram to show an example of an overall structure of a radio base station according to the present embodiment;
FIG. 7 is a diagram to show an example of a functional structure of the radio base station according to the present embodiment;
FIG. 8 is a diagram to show an example of an overall structure of a user terminal according to the present embodiment;
FIG. 9 is a diagram to show an example of a functional structure of the user terminal according to the present embodiment; and
FIG. 10 is a diagram to show an example of a hardware structure of the radio base station and the user terminal according to the present embodiment.

### Description of Embodiments

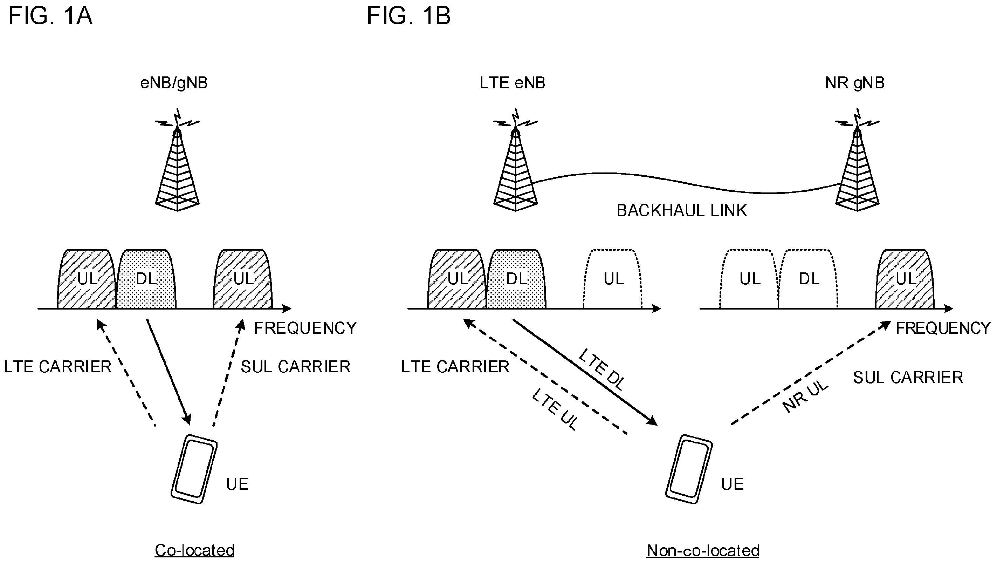

FIGS. 1A and 1B are each a diagram to show an example of a radio communication system using a plurality of carriers including an SUL (Supplemental UpLink) carrier. The description herein takes an example of a first carrier on which DL transmission and UL transmission are performed, and a second carrier on which SUL transmission is performed. However, the number of applicable carriers or the like is not limited to this example.

FIG. 1A is a diagram to show a radio communication system in which a UE connects with an SUL carrier and an LTE and/or NR standalone cell (for example, carrier aggregation (CA)). In the radio communication system shown in FIG. 1A, one or more LTE carriers (cells) (first carrier) and an SUL carrier (carrier of one or more NR carriers) (second carrier) are configured for a user terminal UE.

In the radio communication system shown in FIG. 1A, the LTE carrier and the SUL carrier are aggregated (CA) (Co-located). With the user terminal UE, a radio base station (eNB and/or gNB) performs DL/UL communication by using the first carrier, and performs UL communication by using the second carrier. Although the description herein illustrates a case where the first carrier (first cell) is an LTE carrier (LTE cell), the first carrier may be an NR carrier (NR cell).

FIG. 1B is a diagram to show a radio communication system in which the UE connects with an SUL carrier and an LTE base station and/or an NR base station (for example, CA or dual connectivity (DC)). In the radio communication system shown in FIG. 1B, one or more LTE carriers (cells) (first carrier) for communicating with one radio base station (also referred to as an eNodeB (eNB), an LTE eNB, an LTE base station, or the like), and an SUL carrier (carrier of one or more NR carriers) (second carrier) for communicating with another radio base station (also referred to as a gNodeB (gNB), an NR gNB, an NR base station, or the like) are configured for the user terminal UE.

In the radio communication system shown in FIG. 1B, DC configuration applies to the LTE carrier and the SUL carrier (Non-co-located). With the user terminal UE, the radio base station eNB performs DL/UL communication by using the first carrier. The radio base station gNB performs UL communication by using the second carrier. Although the description herein illustrates a case where the base station using the first carrier (first cell) is an LTE base station, the base station may be an NR base station.

In FIG. 1B, the LTE radio base station eNB and the NR radio base station gNB are connected through a backhaul link (for example, a wired link such as an X2 interface, or a radio link). Accordingly, even when the user terminal UE is connected to the LTE carrier (first carrier) and the SUL carrier (second carrier) at the same time, the base stations can share information. Note that the LTE base station and the NR base station may be installed at the same place, or may be installed in different places geographically away from each other as shown in FIG. 1B.

One or more LTE carriers and one or more NR carriers are mapped to frequency bands different from each other. For example, the LTE carrier may be mapped to a relatively low frequency band (low frequency band), such as at least one of 800 MHz, 1.7 GHz, and 2.1 GHz. For example, the NR carrier may be mapped to a relatively high frequency band (high frequency band), such as a band of 3 GHz or higher. Although the description herein illustrates a case where the SUL carrier is configured as an NR carrier, this is not restrictive. The NR carrier (SUL carrier) may be mapped to a relatively low frequency band, and the LTE carrier may be mapped to a relatively high frequency band.

The description herein illustrates a case where the first carrier (for example, an LTE and/or NR carrier) employs frequency division duplex (FDD), and the LTE UL carrier and the LTE DL carrier are provided to different frequencies. As a matter of course, the first carrier may employ time division duplex (TDD), and the UL carrier and the DL carrier may be provided to the same frequency.

FIG. 1A and FIG. 1B show a case where each of the LTE carrier and the NR carrier is one carrier. However, each of the LTE carrier and the NR carrier may be two or more carriers. The NR carrier may be configured instead of the LTE carrier. Note that the carrier may be interpreted as a cell, a CC, a band, a transmitting point, a base station, or the like.

As described above, in the future radio communication systems, it is assumed that communication is performed by using a plurality of carriers including the SUL carrier that is specialized for UL transmission.

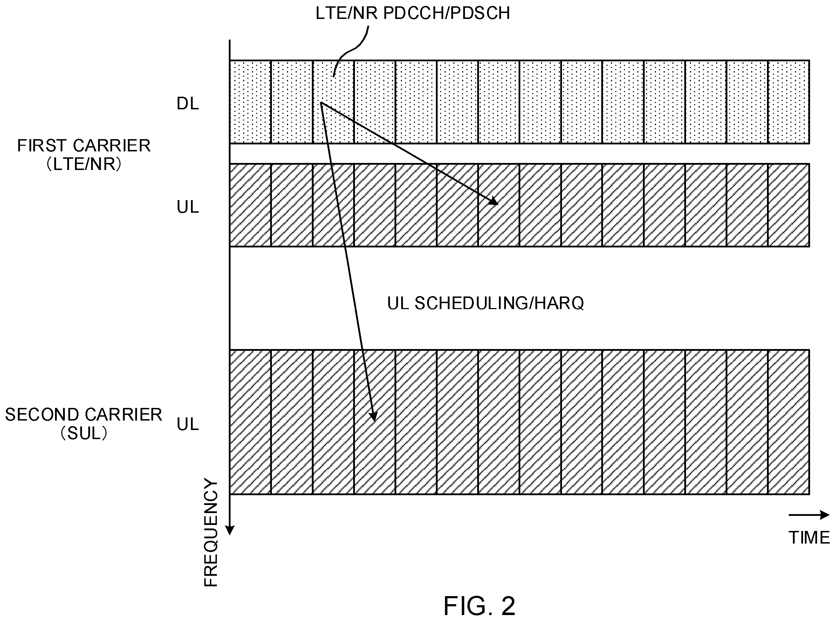

However, a DL signal is not transmitted on the SUL carrier. Therefore, how to control UL signal transmission (for example, scheduling and so on) on the SUL carrier has been posing a problem. For example, as shown in FIG. 1A, if the LTE carrier and/or the NR carrier (first carrier) and the SUL carrier (second carrier) are aggregated (CA), it is conceivable that the base station indicates the UE to perform UL transmission on the second carrier by using DL transmission on the first carrier (see FIG. 2).

FIG. 2 shows a case where UL transmission on the first carrier and UL transmission on the second carrier are indicated (or scheduled) by using a downlink control channel transmitted on the DL of the first carrier. The UL transmission includes UL data (PUSCH) and/or a HARQ-ACK.

In this case, the base station transmits downlink control information (DCI) for indicating (scheduling) the UL transmission by using the downlink control channel of the first carrier. The DCI for indicating UL transmission is also referred to as a UL grant. Note that the DCI for scheduling DL transmission is referred to as a DL assignment. Transmission of DCI including scheduling information of a certain carrier (here, the SUL carrier) by using another carrier (here, the first carrier) is also referred to as cross-carrier scheduling.

When cross-carrier scheduling is employed in the existing LTE systems (for example, Rel. 13 or earlier), a carrier indicator (CI) is included in the DCI such that the UE identifies correspondence between each piece of DCI and its carrier (cell). In the DCI, a field including bits indicating the CI is also referred to as a carrier indicator field (CIF).

When the CIF is configured in the DCI, the UE identifies a carrier (cell) associated with the received DCI (a DL assignment or a UL grant), based on the CIF of each piece of DCI, and controls DL signal reception and/or UL signal transmission in the cell. When the CIF is configured, a bit field of a certain number of bits (for example, 3 bits) for the CIF is added to each DCI format.

When communication is performed by using a plurality of carriers including the SUL carrier, DL transmission cannot be performed on the SUL carrier. Therefore, it is conceivable that the base station employs cross-carrier scheduling, and uses another carrier to transmit DCI (UL grant) including indication of UL transmission on the SUL carrier to the UE.

In other words, when the SUL carrier is configured, cross-carrier scheduling, in which the CIF is used for the SUL carrier, needs to be employed. Meanwhile, it is also conceivable that cross-carrier scheduling need not be performed for another carrier (for example, a carrier on which DL transmission and UL transmission are performed) that is different from the SUL carrier.

When the CIF is used in the existing LTE systems, the CIF is collectively configured for all the cells (CCs), and thus DCI associated with another cell is transmitted in a cell in which DCI is transmitted using a downlink control channel. In this case, the CIF is configured in the DCI of each cell in which DCI transmission is performed. Note that, when the CIF is configured, a certain bit value is configured in the CIF, even if the DCI is DCI associated with its own cell.

In this manner, when cross-carrier scheduling is employed by configuring the CIF at the time of using the SUL carrier in a similar manner to the existing LTE systems, the CIF is configured in DCI (DCI format) transmitted in each cell. In this case, even if cross-carrier scheduling is not required for a carrier other than the SUL carrier, the CIF (for example, 3 bits) is configured in the DCI transmitted in each cell. This causes a problem of increasing a payload (size or capacity) of the DCI.

In view of this, as one aspect of the present invention, the inventors of the present invention focused on a cross-carrier scheduling scheme that does not use the existing CIF (existing CIF configuration mechanism) at the time of using the SUL carrier, and come up with the idea of controlling SUL scheduling by using downlink control information that does not include the CIF and that is transmitted on a certain condition, or by using downlink control information that includes the CIF with limited configuration targets.

As another aspect of the present invention, the inventors of the present invention also come up with the idea of limiting and controlling at least one of the type of a signal and/or a channel transmitted on the SUL carrier, UL transmission power, and timing advance configuration.

One embodiment of the present invention will be described below in detail with reference to the drawings. Note that the following description assumes that one or more LTE carriers and one or more NR carriers are configured for the user terminal. However, a plurality of carriers according to the present embodiment are not limited to such LTE carrier(s) and NR carrier(s), as long as the plurality of carriers are of different RATs.

If CA is employed by using a plurality of carriers including the SUL carrier (an SUL cell or an SUL CC), the SUL carrier may be configured as a normal SCell, or may be configured as a PUCCH SCell on which PUCCH transmission is performed. If the SUL is configured as a PUCCH SCell, uplink control information (UCI) may be transmitted by using a PUCCH of the SUL carrier.

Alternatively, PUCCH transmission may not be performed on the SUL carrier (SUL carrier may not be used as a PUCCH SCell). In this case, if a PUSCH is allocated on the SUL carrier, uplink control information may be included in the PUSCH to transmit the PUSCH. Alternatively, the transmission of uplink control information itself may not be performed on the SUL carrier.

If DC is employed by using a plurality of carriers including the SUL carrier (an SUL cell or an SUL CC), the SUL carrier may be configured as a normal SCell (for example, an SCell included in an SCG), or may be configured as a PSCell on which PUCCH transmission is performed. If the SUL is configured as a PSCell, uplink control information (UCI) may be transmitted by using a PUCCH of the SUL carrier.

Alternatively, PUCCH transmission may not be performed on the SUL carrier (SUL carrier may not be used as a PSCell). In this case, if a PUSCH is allocated on the SUL carrier, uplink control information may be included in the PUSCH to transmit the PUSCH. Alternatively, the transmission of uplink control information itself may not be performed on the SUL carrier.

### (First Aspect)

In the present aspect, when communication is performed by using a plurality of carriers including a carrier on which DL transmission is performed and the SUL carrier, SUL scheduling is controlled by using downlink control information that does not include the CIF and that is transmitted on a certain condition (Case 1). Alternatively, SUL scheduling is controlled by using downlink control information that includes the CIF with limited configuration targets (Case 2). Case 1 allowing the use of DCI not including the CIF and Case 2 allowing the use of the CIF with a limitation will be described below.

### <Case 1>

In Case 1, DCI not including the CIF is transmitted to the UE on a certain condition. The certain condition may be a condition associated with the SUL carrier. In other words, the base station applies any one of a first condition (certain condition) that is associated with the SUL carrier and a second condition that is not associated with the SUL carrier (for example, associated with a non-SUL carrier) to the DCI, and performs transmission.

When the UE detects DCI that does not include the CIF and that is transmitted on a carrier other than the SUL carrier on a certain condition (Implicit information notified on DCI), the UE controls UL transmission on the SUL carrier, based on the DCI. In other words, without using the CIF, the UE determines whether or not the DCI is DCI for the SUL carrier (for example, an UL grant), based on the implicit information.

For example, a certain condition for the SUL carrier is configured regarding at least one of a search space, a control resource set, a DCI format, and a DCI payload. Then, the certain condition is applied to DCI for indicating UL transmission on the SUL carrier to transmit the DCI to the UE. The certain condition applied to the DCI for the SUL carrier may be defined in a specification in advance, or may be notified (or configured) from the base station to the UE by using higher layer signaling and/or physical layer signaling.

The search space is a candidate region in which the UE performs monitoring at the time of detecting DCI, and is also referred to as downlink control channel candidates. Types of search spaces include a UE-specific search space, which is configured for each individual UE, and a common search space, which is configured to be shared by a plurality of UEs (for example, a certain group of UEs). For example, a UE-specific search space associated with the SUL carrier is configured, and DCI for the SUL carrier is mapped to the search space.

The control resource set refers to radio resources constituted with a certain frequency domain and time domain (for example, one OFDM symbol, two OFDM symbols, and so on) configured for the UE. The control resource set is also referred to as a CORESET, a control subband, a search space set, a search space resource set, a control region, a control subband, an NR-PDCCH region, or the like.

Each control resource set is constituted with a certain number of resource units, and can be configured to be allocated to a system bandwidth (carrier bandwidth), or to or lower than a maximum bandwidth within which the user terminal can perform a receiving process. For example, the control resource set can be constituted with one or more RBs (PRBs and/or VRBs) in the frequency direction. Here, the RB refers to a frequency resource block unit consisting of 12 subcarriers, for example. The UE can monitor downlink control information within the range of the control resource set, and can control reception. Consequently, the UE no longer needs to constantly monitor the entire system bandwidth during a receiving process of downlink control information. As a result, power consumption can be reduced.

The control resource set is a frame of resources to which the downlink control information is mapped, or of time resources and/or frequency resources to which the NR-PDCCH is allocated. The control resource set can be defined based on the size of a resource unit. For example, the size of one control resource set can be set to a size of an integer multiple of the size of a resource unit. The control resource set may be constituted with consecutive or non-consecutive resource units. The resource unit is a unit of resources allocated to the NR-PDCCH, and may be any one of a PRB, a PRB pair, an NR-CCE, an NR-REG, and an NR-REG group.

Regarding the DCI format, a plurality of DCI formats are defined in a specification in advance. The base station uses a certain DCI format, according to information and so on to be notified to the UE. Types of DCI formats include a DL assignment used for notification of DL transmission scheduling, a UL grant used for notification of UL transmission scheduling, and a format that does not include DL and UL scheduling information.

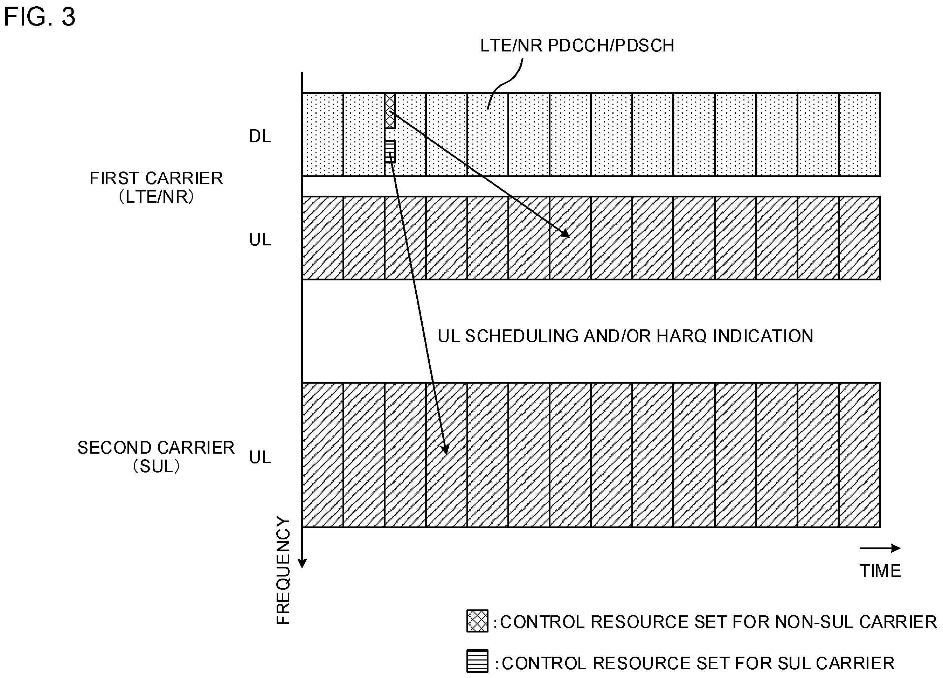

Now, the following case will be described: a certain condition for the SUL carrier is configured regarding a search space and/or a control resource set, and the certain condition is applied to DCI for indicating UL transmission on the SUL carrier. In this case, a search space and/or a control resource set for the SUL carrier is configured, as well as a search space and/or a control resource set for the non-SUL (see FIG. 3).

FIG. 3 shows a case where a control resource set used for transmission of DCI for the non-SUL carrier and a control resource set used for transmission of DCI for the SUL carrier (second carrier) are separately configured in the non-SUL carrier (first carrier). More specifically, control resource sets associated with respective carriers are configured in different frequency and/or time resources.

When the UE monitors the search space and/or the control resource set for the SUL carrier and detects DCI on the non-SUL carrier, the UE determines that the DCI is configured for the SUL carrier, and controls UL transmission on the SUL carrier. Note that information related to the search space and/or the control resource set configured for the SUL carrier (for example, a control resource set allocation region and so on) may be notified from the base station to the UE by using higher layer signaling, physical layer signaling (for example, downlink control information), and/or the like.

The number of resources of the search space and/or the control resource set for the SUL carrier may be configured separately from (for example, configured to be different from) the number of resources used in the search space and/or the control resource set for the non-SUL carrier. As an example, the number of resources of the search space and/or the control resource set for the SUL carrier is set smaller than the number of resources of the search space and/or the control resources for the non-SUL carrier. In this manner, a large number of resources can be reserved for the DCI for the non-SUL carrier on which a DL assignment is transmitted as well as a UL grant.

The number of times of decoding (number of times of blind detection) applied to the search space and/or the control resource set for the SUL carrier may be configured separately from (for example, configured to be different from) the number of times of decoding applied to the search space and/or the control resource set for the non-SUL carrier. As an example, the number of times of decoding of the search space and/or the control resource set for the SUL carrier is configured smaller than the number of times of decoding of the search space and/or the control resources for the non-SUL carrier. In this manner, a large number of PDCCH candidates can be configured for the DCI for the non-SUL carrier on which a DL assignment is transmitted as well as a UL grant. As a result, DCI collision can be reduced. In this case, the number of PDCCH candidates of the control resource set for the SUL carrier may be configured smaller than the number of PDCCH candidates of the control resource set for the SUL carrier.

The DCI for the non-SUL carrier may be associated with a DCI format and/or a DCI payload. For example, when the DCI detected on the non-SUL carrier employs a certain DCI format, the UE may determine that the DCI is DCI for the SUL carrier.

Since only UL transmission is performed on the SUL carrier, it is also assumed that the amount of information notified on the DCI is reduced smaller than that notified on the non-SUL carrier (for example, it is also conceivable to not apply closed-loop power control to the SUL carrier and not include a TPC command in the DCI). Therefore, when the UE detects DCI with a DCI payload of a certain value or less, the UE may determine that the DCI is DCI for the SUL carrier. The DCI format and the payload of the DCI may be used in combination. For example, when the UE detects DCI of a certain DCI format and with a DCI payload of a certain value or less, the UE may determine that the DCI is DCI for the SUL carrier.

In this manner, indication of UL transmission on the SUL carrier can be issued and increase of a payload of the DCI can be prevented at the same time, by associating a certain condition applied to DCI transmission with the use of the SUL carrier, in place of the CIF of the existing LTE systems.

### <Case 2>

In Case 2, the CIF is included in DCI for the SUL carrier with limited CIF configuration targets, to transmit the DCI to the UE. In other words, when the CIF is configured to be used for the SUL carrier, the CIF is not included in all the pieces of DCI (for example, a UL grant and/or a DL assignment), but piece(s) of DCI not including the CIF is allowed.

For example, a configuration that the CIF is configured in a UL grant and the CIF is not configured in a DL assignment is allowed. Alternatively, the CIF can be configured in the DL and the UL independently of each other. In this manner, when the CIF is configured in a UL grant for indicating UL transmission on the SUL carrier, DCI transmission can be performed by configuring the CIF in the DCI (UL grant) for scheduling the UL transmission, and not configuring the CIF in DCI (DL assignment) for scheduling DL transmission.

As a result, even when cross-carrier scheduling using the CIF for the SUL carrier is employed, increase of DCI overhead of the DL assignment can be prevented.

Alternatively, the CIF for the DCI (for example, a UL grant for the SUL carrier) for indicating UL transmission on the SUL carrier is configured separately from the CIF for the DCI (a UL grant and a DL assignment) used for the non-SUL carrier. For example, when configuring a carrier for the SUL, the base station configures an SUL carrier-dedicated CIF for the UE (notifies the UE of the SUL carrier-dedicated CIF), and does not configure the CIF for the non-SUL carrier.

In this case, the base station can configure the CIF only for the DCI (for example, a UL grant) for the SUL carrier, without configuring the CIF for the DCI for the non-SUL carrier. In this case, the number of bits of the SUL carrier-dedicated CIF may be set smaller than the number of bits of the existing CIF (for example, 1 bit). In this manner, when cross-carrier scheduling using the CIF is needed only for the SUL carrier, increase of DCI overhead of the non-SUL carrier can be prevented.

Alternatively, the SUL carrier may be restricted to being used only for grant-free uplink transmission in which UL transmission is performed without using a UL transmission indication (UL grant) from the base station, and/or contention based multiple access. In this manner, uplink transmission can be performed on the SUL carrier, without using the CIF.

### (Second Aspect)

In the present aspect, when communication is performed by using a plurality of carriers including a carrier on which DL transmission is performed and the SUL carrier, the type of a UL signal and/or a UL channel transmitted on the SUL carrier is limited, in comparison with the non-SUL carrier. Alternatively, the UE limits UL transmission transmitted on the SUL carrier on a certain condition.

Since DL transmission is not performed on the SUL carrier, measurement of a DL reference signal and/or a measurement result report (measurement/measurement report) cannot be performed on the SUL carrier. In the existing LTE systems, the measurement result of the DL reference signal is used for transmission power control (for example, path loss measurement), interference control, and so on. Thus, open-loop power control (OLPC) and so on cannot be appropriately performed on the SUL carrier, which may result in hindering interference control and so on and deteriorating UL quality, in comparison with UL transmission on the non-SUL carrier.

In the second aspect, control is performed so that a certain UL signal and/or UL channel, whose quality assurance is crucial, is not transmitted on the SUL carrier. For example, control is performed so that an uplink control channel (PUCCH) is not configured (transmitted) on the SUL carrier. In this case, the SUL carrier may be configured as an SCell, by means of carrier aggregation (CA). Simultaneous transmission of the PUCCH and the PUSCH may not be configured on the SUL carrier.

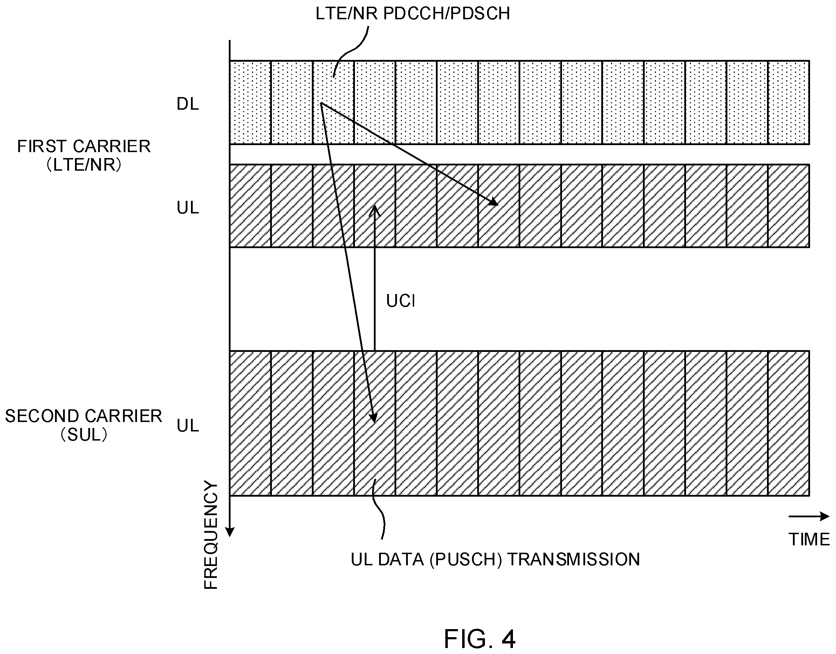

Control may be performed so that the transmission of uplink control information (UCI) itself is not performed on the SUL carrier. If UL data (for example, a PUSCH) transmission timing and UCI transmission timing overlap in the existing systems, the UE controls transmission by multiplexing UCI on the PUSCH (UCI on PUSCH). In view of this, in the second aspect, even if PUSCH transmission timing and UCI transmission timing overlap on the SUL carrier, the UE controls so that UCI is not multiplexed on the PUSCH of the SUL carrier (see FIG. 4).

For example, if there is a PUSCH transmission on another non-SUL carrier, the UE transmits UCI by multiplexing the UCI on the PUSCH of the non-SUL carrier (UCI on PUSCH). In contrast, if there is no PUSCH transmission on the non-SUL carrier, and there is PUSCH transmission only on the SUL carrier, UCI is transmitted by being multiplexed on the PUCCH of a certain carrier (for example, a PCell, a PUCCH cell, and so on).

Note that the certain UL signal and/or UL channel is not limited to uplink control information (UCI). In addition, transmission of a sounding reference signal (SRS) and so on using the SUL carrier may be limited. If SRS transmission is limited on the SUL carrier, channel quality and so on of UL transmission can be performed by using a UL demodulation reference signal (for example, a DMRS).

In this manner, quality deterioration in UL transmission can be prevented, by limiting transmission of a certain UL signal and/or UL channel on the SUL carrier and by transmitting a signal (for example, UCI), whose quality assurance is crucial, on the non-SUL carrier.

In power control of UL transmission, the non-SUL carrier may be controlled preferentially over the SUL carrier. For example, if UL transmission timings of a plurality of carriers overlap, the total transmission power used for the UL transmission of the carriers may exceed transmission power allowed for the UE (allowable transmission power).

If the total transmission power used for UL transmission exceeds the allowable transmission power (the situation is also referred to as being "power-limited"), control needs to be performed so that the total transmission power does not exceed the allowable transmission power, such as by reducing UL transmission power of any of the carriers (scaling), or by not performing UL transmission of any of the carriers (dropping).

In view of this, in the second aspect, when a power-limited situation occurs in a plurality of carriers including the non-SUL carrier and the SUL carrier due to simultaneous UL transmission, dropping and/or power scaling is preferentially applied to UL transmission on the SUL carrier. For example, as described above, it is also conceivable to limit transmission of a crucial signal (for example, UCI and so on) on the SUL carrier. In this case, if transmission on the non-SUL carrier is preferentially performed in a power-limited situation (power scaling and/or dropping is applied to the SUL carrier), UCI transmission can be preferentially performed. As a result, deterioration in communication quality can be prevented.

### (Third Aspect)

In the present aspect, when communication is performed by using a plurality of carriers including a carrier on which DL transmission is performed and the SUL carrier, transmission timing and/or transmission power control of the SUL carrier is controlled based on the non-SUL carrier.

For example, the SUL carrier is included in the same timing advance group (TAG) as the non-SUL carrier. If carrier aggregation (CA) is employed, UL transmission timing is controlled for each TAG. If a plurality of TAGs are configured (multiple timing advance), the UE controls UL transmission timing for each TAG. In other words, UL transmission timing of carriers included in the same TAG is controlled to be the same, and UL transmission timing of carriers included in different TAGs is independently controlled.

Since DL transmission is not performed on the SUL carrier, it is difficult for the UE to control timing (or synchronization) with the base station only on the SUL carrier. Therefore, by including the SUL carrier in the same TAG as a certain non-SUL carrier, UL transmission timing on the SUL carrier can be appropriately controlled.

The base station may configure information related to the TAG to which the SUL carrier belongs for the UE (notify the UE of the information). For example, the SUL carrier may be included in the same TAG as the PCell or the PUCCH SCell. Based on the information related to the TAG notified from the base station, the UE can control UL transmission timing. Based on the TAG to which the SUL carrier belongs, the base station can know the timing of UL transmission transmitted from the UE on the SUL carrier, and can thereby appropriately perform a receiving process.

Owing to the control of transmission by including the SUL carrier in the same TAG as a certain non-SUL carrier, DL reference timing on the certain non-SUL carrier can be used in the SUL carrier. For example, it is conceivable to use a measurement result (for example, received power and so on) of a DL reference signal on the non-SUL carrier for transmission power control (for example, path loss configuration) of the SUL carrier. In this case, by using a DL reference signal of the non-SUL carrier belonging to the same TAG as the SUL carrier, transmission power and so on of the SUL carrier can be appropriately configured.

In this manner, by configuring the SUL carrier in association with a reference signal (reference signal used for open-loop power control) of the non-SUL carrier, UL transmission power on the non-SUL carrier can be appropriately controlled based on received power of the reference signal.

### (Radio Communication System)

Hereinafter, a structure of a radio communication system according to the present embodiment will be described. In the radio communication system, the radio communication method according to each aspect described above is employed. Note that the radio communication method according to each aspect described above may be employed independently or may be employed in combination.

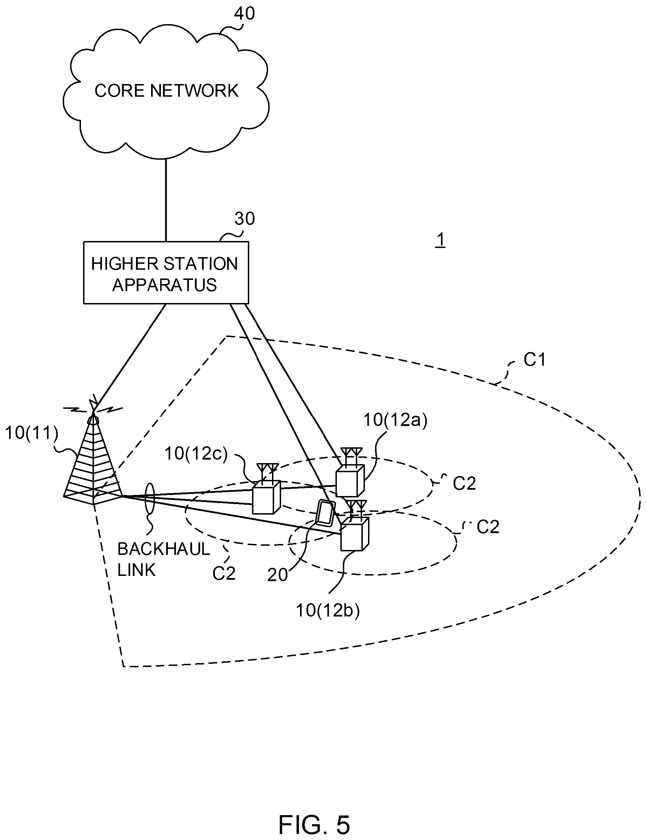

FIG. 5 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be a non-standalone type (NR NSA), whose operation is achieved by cooperation of the existing RAT (for example, SUPER 3G, LTE-A (LTE-Advanced), IMT-Advanced, or 4G) and a new RAT (for example, 5G, FRA (Future Radio Access), or NR (New RAT)).

The radio communication system 1 shown in FIG. 5 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. Employed RATs and/or numerologies may vary between cells. Note that the numerology may be a RAT-specific communication parameter (for example, at least one of a subcarrier spacing, a symbol length, a CP length, and a TTI length).

The user terminals 20 can connect with both the radio base station 11 and the radio base stations 12. It is assumed that the user terminals 20 use the macro cell C1 and the small cells C2, which use different frequencies, at the same time by means of CA or DC. The user terminals 20 can adopt CA or DC by using a plurality of cells (CCs) (for example, two or less CCs). Further, as the plurality of cells, the user terminals can use a licensed band CC and an unlicensed band CC.

The user terminals 20 can perform communication by using time division duplex (TDD) or frequency division duplex (FDD) in each cell. The TDD cell and the FDD cell may be respectively referred to as a TDD carrier (frame configuration type 2), and an FDD carrier (frame configuration type 1), for example.

Each cell (carrier) may employ either one or both of a TTI having a relatively long time length (for example, 1 ms) (also referred to as a subframe, a normal TTI, a long TTI, a normal subframe, a long subframe, a slot, or the like), and a TTI having a relatively short time length (also referred to as a short TTI, a short subframe, a slot, a subslot, a mini-slot, or the like). Each cell may simultaneously employ TTIs having different time lengths.

Between the user terminals 20 and the radio base station 11, communication can be carried out by using a carrier of a relatively low frequency band (for example, 2 GHz) (referred to as an "existing carrier," a "Legacy carrier" and so on). In contrast, communication between the user terminals 20 and the radio base stations 12 may use a carrier of a frequency band (for example, 3.5 GHz, 5 GHz, 30 to 70 GHz, and so on) that is higher than the frequency band of the existing carrier, or of a frequency band the same as the frequency band of the existing carrier. Note that the structure of the frequency band for use in each radio base station is by no means limited to these.

Connection between the radio base station 11 and each radio base station 12 (or between two radio base stations 12) may be implemented by a configuration (backhaul link) enabling wired connection (for example, an optical fiber in compliance with CPRI (Common Public Radio Interface), an X2 interface, and so on), or enabling radio connection. In the radio communication system according to the present invention, as shown in FIG. 1B, the LTE eNB that performs DL transmission/UL transmission with the user terminal UE and the NR gNB that receives UL signals from the user terminal UE are connected through the backhaul link. Note that the LTE eNB may be substituted by the NR gNB.

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on.

The LTE base station (LTE eNB) shown in FIGS. 1A and 1B may be the radio base station 11 and/or the radio base station 12. The NR base station (NR gNB) may be the radio base station 11 and/or the radio base station 12. Hereinafter, the radio base stations 11 and 12 will be collectively referred to as "radio base stations 10," unless specified otherwise.

Each user terminal 20 is a terminal compatible with one or more RATs, such as at least one of LTE, LTE-A, NR, and 5G. Examples of the user terminal 20 may include a fixed communication terminal, as well as a mobile communication terminal.

In the radio communication system 1, as radio access schemes, the downlink (DL) can employ OFDMA (orthogonal frequency division multiple access), and the uplink (UL) can employ SC-FDMA (single carrier frequency division multiple access). OFDMA is a multicarrier transmission scheme to perform communication by dividing a frequency band into a plurality of narrow frequency bands (subcarriers) and mapping data to each subcarrier. SC-FDMA is a single carrier transmission scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these. OFDMA may be used in the UL.

In the radio communication system 1, a DL data channel (also referred to as a PDSCH (Physical Downlink Shared Channel), DL shared channel, and so on), which is shared by the user terminals 20, a broadcast channel (PBCH (Physical Broadcast Channel)), L1/L2 control channels and so on, are used as DL channels. At least one of user data, higher layer control information, SIBs (System Information Blocks) and so on is transmitted on the PDSCH. The MIBs (Master Information Blocks) are transmitted on the PBCH.

The L1/L2 control channels include DL control channels (also referred to as a PDCCH (Physical Downlink Control Channel), an EPDCCH (Enhanced Physical Downlink Control Channel), an NR-PDCCH, or the like), a PCFICH (Physical Control Format Indicator Channel), a PHICH (Physical Hybrid-ARQ Indicator Channel) and so on. Downlink control information (DCI), including PDSCH and PUSCH scheduling information, and so on are transmitted on the PDCCH. The number of OFDM symbols to use for the PDCCH is transmitted on the PCFICH. The EPDCCH is frequency-division multiplexed with the PDSCH and used to transmit DCI and so on, like the PDCCH. PUSCH transmission confirmation information (also referred to as an A/N, a HARQ-ACK, a HARQ-ACK bit, an A/N codebook, and so on) can be transmitted on at least one of the PHICH, the PDCCH, and the EPDCCH.

In the radio communication system 1, a UL data channel (also referred to as a PUSCH (Physical Uplink Shared Channel), a UL shared channel, an NR-PUSCH, or the like), which is shared by the user terminals 20, a UL control channel (PUCCH (Physical Uplink Control Channel) or an NR-PUCCH), a random access channel (PRACH (Physical Random Access Channel)) and so on are used as UL channels. User data and higher layer control information are transmitted on the PUSCH. Uplink control information (UCI) including at least one of PDSCH transmission confirmation information (A/N, HARQ-ACK), channel state information (CSI), a scheduling request (SR), and so on is transmitted on the PUSCH or the PUCCH. By means of the PRACH, random access preambles for establishing connections with cells can be transmitted.

### <Radio Base Station>

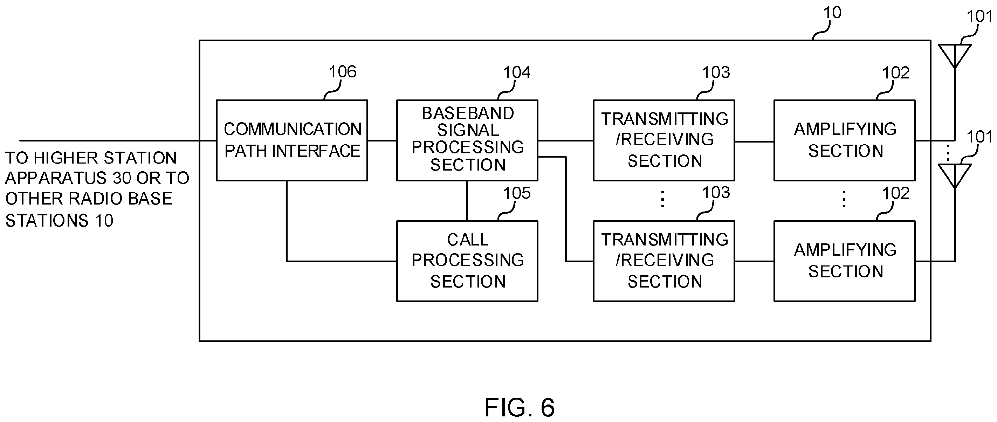

FIG. 6 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103. The radio base station 10 may be either an LTE base station or an NR base station.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to at least one transmission process of a PDCP (Packet Data Convergence Protocol) layer process, division and coupling of the user data, RLC (Radio Link Control) layer transmission processes such as RLC retransmission control, MAC (Medium Access Control) retransmission control (for example, a HARQ (Hybrid Automatic Repeat reQuest) process), scheduling, transport format selection, channel coding, rate matching, scrambling, an inverse fast Fourier transform (IFFT) process, and a precoding process, and the result is forwarded to each transmitting/receiving section 103. Furthermore, downlink control signals are also subjected to transmission processes such as channel coding and/or inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signal through frequency conversion and outputs to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs at least one of call processing such as setting up and releasing for communication channels, management of the state of the radio base station 10, and management of the radio resources.

The transmission line interface 106 transmits and/or receives signals to and/or from the higher station apparatus 30 via a certain interface. The transmission line interface 106 may transmit and/or receive signals (backhaul signaling) with neighboring radio base stations 10 via the backhaul link (for example, an optical fiber in compliance with the CPRI (Common Public Radio Interface) and an X2 interface). In the present embodiment, the transmission line interface 106 may constitute a transmitting section and/or a receiving section that transmits and/or receives signals with another radio base station 10.

The transmitting/receiving sections 103 transmit a DL signal (for example, at least one of DCI (DL assignment for scheduling DL data and/or UL grant for scheduling UL data), DL data, and a DL reference signal), by using the non-SUL carrier (LTE DL carrier and/or NR DL carrier). The transmitting/receiving sections 103 receive a UL signal (for example, at least one of UL data, UCI, and a UL reference signal), by using the non-SUL carrier and/or the SUL carrier. Note that the transmitting/receiving sections 103 of a radio base station for which the SUL carrier is configured only receive a UL signal (or do not transmit a DL signal).

The transmitting/receiving sections 103 transmit certain downlink control information that does not include the carrier indicator field (CIF) and that is transmitted on a certain condition, and/or certain downlink control information that includes the CIF configured independently of the CIF of downlink control information used for notification of at least DL allocation. The transmitting/receiving sections 103 may include the CIF configured individually for the SUL carrier in the certain downlink control information for the SUL carrier, to transmit the certain downlink control information. The transmitting/receiving sections 103 may transmit information related to the timing advance group (TAG) to which the SUL carrier belongs.

The transmission line interface 106 of the NR gNB for which the SUL carrier is configured may transmit an NR UL signal received on the SUL carrier to the LTE eNB through the backhaul link. The transmission line interface 106 of the LTE eNB may transmit data, control information, and so on to the NR gNB through the backhaul link (for example, the X2 interface). The transmission line interface 106 of the NR gNB may receive MAC signaling and/or NR control information from the LTE eNB through the backhaul link.

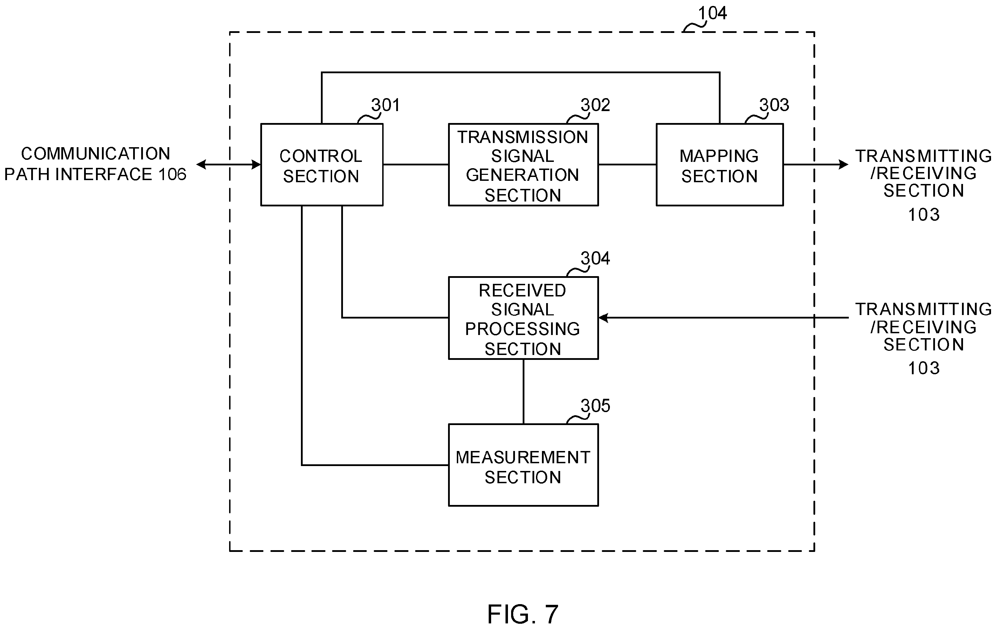

FIG. 7 is a diagram to show an example of a functional structure of the radio base station according to the present embodiment. Note that, FIG. 7 primarily shows functional blocks that pertain to characteristic parts of the present embodiment, and the radio base station 10 may include other functional blocks that are necessary for radio communication as well. As illustrated in FIG. 7, the baseband signal processing section 104 includes a control section 301, a transmission signal generation section 302, a mapping section 303, a received signal processing section 304, and a measurement section 305. Each MAC entity according to the present embodiment may include at least one of the control section 301, the transmission signal generation section 302, and the received signal processing section 304.

The control section 301 controls the whole of the radio base station 10. For example, the control section 301 controls at least one of DL signal generation of the transmission signal generation section 302, DL signal mapping of the mapping section 303, a UL signal receiving process (for example, demodulation and so on) of the received signal processing section 304, and measurement of the measurement section 305.

Specifically, based on UCI fed back by the user terminal 20, the control section 301 controls scheduling and/or a transmission process (for example, modulation, coding, a transport block size (TBS), and so on) of a DL signal.

Based on UCI fed back by the user terminal 20, the control section 301 also controls scheduling of a UL signal. The control section 301 controls a receiving process (for example, at least one of demodulation, decoding, carrier separation, and so on) of the UL signal. For example, the control section 301 controls a receiving process of an LTE UL signal and an NR UL signal respectively using the LTE UL carrier and the NR UL carrier.

The control section 301 controls transmission of certain downlink control information that does not include the carrier indicator field (CIF) and that is transmitted on a certain condition, and/or certain downlink control information that includes the CIF configured independently of the CIF of downlink control information used for notification of at least DL allocation.

The control section 301 can be constituted with a controller, a control circuit or control apparatus that can be described based on general understanding of the technical field to which the present invention pertains.

Based on a command from the control section 301, the transmission signal generation section 302 may generate a DL signal (including at least one of DL data, DCI, a DL reference signal, control information carried on higher layer signaling), and may output the generated DL signal to the mapping section 303.

The transmission signal generation section 302 can be a signal generator, a signal generation circuit or signal generation apparatus that can be described based on general understanding of the technical field to which the present invention pertains.

The mapping section 303 maps the DL signals generated in the transmission signal generation section 302 to certain radio resources, based on indication from the control section 301, and outputs these to the transmitting/receiving sections 103. The mapping section 303 can be a mapper, a mapping circuit or mapping apparatus that can be described based on general understanding of the technical field to which the present invention pertains.

The received signal processing section 304 performs a receiving process (for example, at least one of demapping, demodulation, decoding, carrier separation, and so on) of a UL signal transmitted from the user terminal 20. Specifically, the received signal processing section 304 may output a received signal and/or a signal subjected to the receiving process to the measurement section 305. The received signal processing section 304 also performs a receiving process of UCI, based on UL control channel configuration indicated by the control section 301.

For example, the measurement section 305 may measure UL channel quality, based on received power of a UL reference signal (for example, RSRP (Reference Signal Received Power)) and/or received quality (for example, RSRQ (Reference Signal Received Quality)). The measurement results may be output to the control section 301.

### <User Terminal>

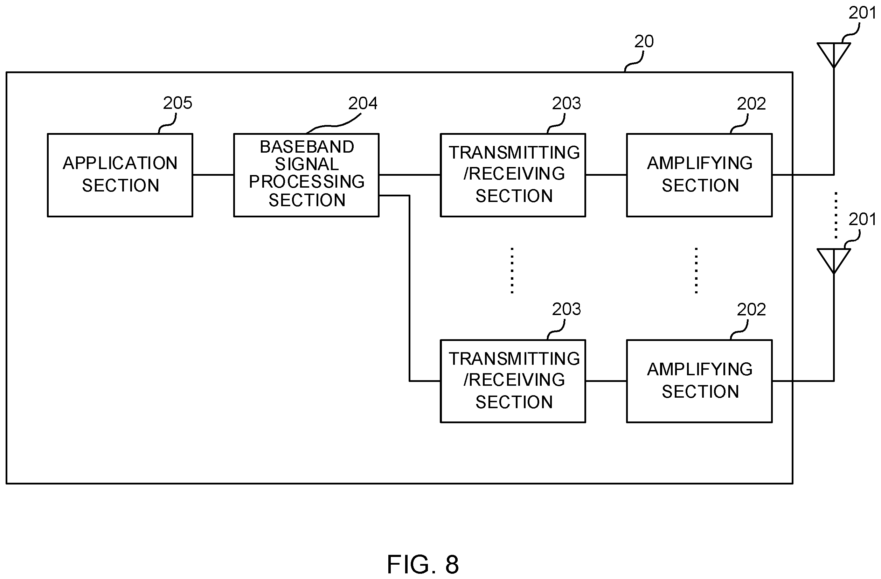

FIG. 8 is a diagram to show an example of an overall structure of a user terminal according to the present embodiment. A user terminal 20 includes a plurality of transmitting/receiving antennas 201 for MIMO transmission, amplifying sections 202, transmitting/receiving sections 203, a baseband signal processing section 204 and an application section 205. The user terminal 20 supports a plurality of RATs (for example, LTE and NR).

Radio frequency signals that are received in the plurality of transmitting/receiving antennas 201 are amplified in respective amplifying sections 202. The transmitting/receiving sections 203 receive the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The DL data is forwarded to the application section 205. The application section 205 performs processes related to higher layers above the physical layer and the MAC layer, and so on.

Meanwhile, the UL data is input from the application section 205 to the baseband signal processing section 204. The baseband signal processing section 204 performs at least one of a retransmission control process (for example, a HARQ process), channel coding, rate matching, puncturing, a discrete Fourier transform (DFT) process, an IFFT process, and so on, and the result is forwarded to each transmitting/receiving section 203. The baseband signal processing section 204 also performs at least one of channel coding, rate matching, puncturing, a DFT process, an IFFT process, and so on for UCI (for example, at least one of a DL signal A/N, channel state information (CSI), and a scheduling request (SR), and so on), and the result is forwarded to each transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive a DL signal (for example, at least one of DCI (DL assignment for scheduling DL data and/or UL grant for scheduling UL data), DL data, and a DL reference signal), by using the non-SUL carrier (LTE DL carrier and/or NR DL carrier). The transmitting/receiving sections 203 transmit a UL signal (for example, at least one of UL data, UCI, and a UL reference signal), by using the non-SUL carrier and/or the SUL carrier. Note that the transmitting/receiving sections 203 only transmit a UL signal on the SUL carrier (or do not transmit a DL signal).

The transmitting/receiving sections 203 receive certain downlink control information that does not include the carrier indicator field (CIF) and that is transmitted on a certain condition, and/or certain downlink control information that includes the CIF configured independently of the CIF of downlink control information used for notification of at least DL allocation. The transmitting/receiving sections 203 may receive certain downlink control information including the CIF configured individually for the SUL carrier. The transmitting/receiving sections 203 may receive information related to the timing advance group (TAG) to which the SUL carrier belongs.

The transmitting/receiving sections 203 can be transmitters/receivers, transmitting/receiving circuits or transmitting/receiving apparatus that can be described based on general understanding of the technical field to which the present invention pertains. Further, each transmitting/receiving section 203 may be structured as a transmitting/receiving section in one entity, or may be constituted with a transmitting section and a receiving section.

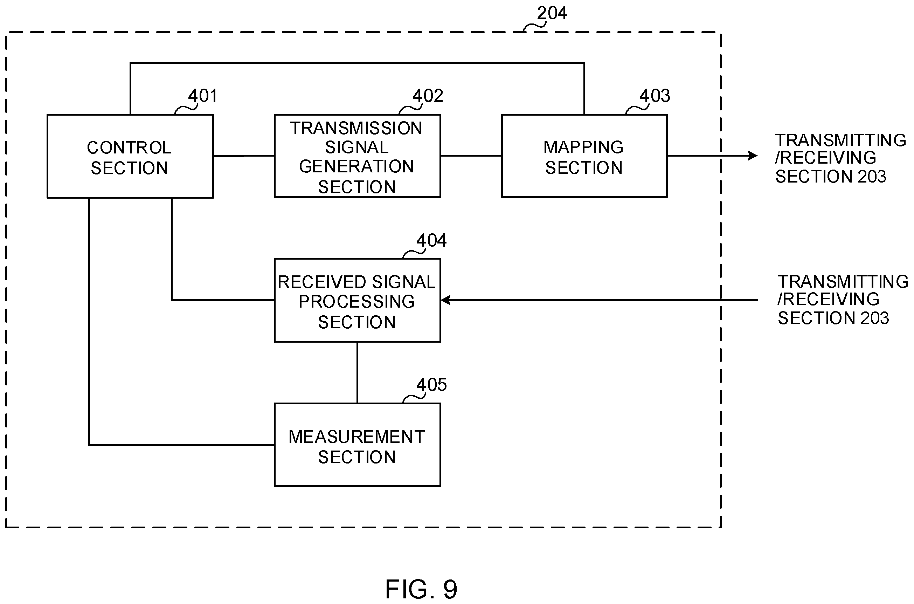

FIG. 9 is a diagram to show an example of a functional structure of a user terminal according to the present embodiment. Note that, FIG. 9 primarily shows functional blocks that pertain to characteristic parts of the present embodiment, and the user terminal 20 may include other functional blocks that are necessary for radio communication as well. Each MAC entity according to the present embodiment may include at least one of a control section 401, a transmission signal generation section 402, and a received signal processing section 404.

As shown in FIG. 9, the baseband signal processing section 204 provided in the user terminal 20 includes a control section 401, a transmission signal generation section 402, a mapping section 403, a received signal processing section 404 and a measurement section 405.

The control section 401 controls the whole of the user terminal 20. For example, the control section 401 controls at least one of UL signal generation of the transmission signal generation section 402, UL signal mapping of the mapping section 403, a DL signal receiving process of the received signal processing section 404, and measurement of the measurement section 405. Specifically, based on DCI (DL assignment), the control section 401 controls a DL signal receiving process (for example, demodulation, decoding, separation into individual carriers, and so on) of the received signal processing section 404. Based on DCI (UL grant), the control section 401 also controls UL signal generation and a transmission process (for example, coding, modulation, mapping, and so on).

The control section 401 controls transmission of a UL signal on the second carrier (SUL carrier), based on downlink control information transmitted from the first carrier (non-SUL carrier). For example, the control section 401 controls UL transmission on the SUL carrier, based on certain downlink control information that does not include the carrier indicator field (CIF) and that is transmitted on a certain condition, or downlink control information that includes the CIF (for example, CIF configured individually for the SUL carrier) configured independently of the CIF of downlink control information used for notification of at least DL allocation.

The control section 401 may control so that transmission of uplink control information using the SUL carrier (for example, PUCCH transmission, UCI on PUSCH, and so on) is not performed. Further, if UL transmission on the non-SUL carrier and UL transmission on the SUL carrier overlap and uplink transmission power exceeds a certain value (for example, a power-limited situation), the control section 401 may control reducing power used for the UL transmission on the SUL carrier or perform control so that the UL transmission on the SUL carrier is not performed.

The control section 401 may control UL transmission, based on the same timing advance group as another carrier (non-SUL carrier) on which at least DL transmission is performed.

The control section 401 can be constituted with a controller, a control circuit or control apparatus that can be described based on general understanding of the technical field to which the present invention pertains.

Based on a command from the control section 401, the transmission signal generation section 402 generates a UL signal and DL signal transmission confirmation information (for example, coding, rate matching, puncturing, modulation, and so on), and outputs the generated resultant to the mapping section 403. The transmission signal generation section 402 can be a signal generator, a signal generation circuit or signal generation apparatus that can be described based on general understanding of the technical field to which the present invention pertains.

The mapping section 403 maps the UL signals and the DL signal transmission confirmation information generated in the transmission signal generation section 402 to radio resources, based on indication from the control section 401, and outputs the result to the transmitting/receiving sections 203. The mapping section 403 can be a mapper, a mapping circuit or mapping apparatus that can be described based on general understanding of the technical field to which the present invention pertains.

The received signal processing section 404 performs a receiving process (for example, demapping, demodulation, decoding, and so on) of a DL signal. For example, the received signal processing section 404 may perform a decoding process for each CB, in accordance with a command from the control section 401, and may output a decoding result of each CB to the control section 401.

The received signal processing section 404 outputs, to the control section 401, information received from the radio base station 10. For example, the received signal processing section 404 outputs, to the control section 401, broadcast information, system information, higher layer control information carried on higher layer signaling such as RRC signaling, L1/L2 control information (for example, a UL grant and a DL assignment), and so on.

The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The measurement section 405 measures a channel state, based on a reference signal (for example, a CSI-RS) from the radio base station 10, and outputs a measurement result to the control section 401. Note that such channel state measurement may be performed for each CC.

The measurement section 405 can be constituted with a signal processor, a signal processing circuit or signal apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

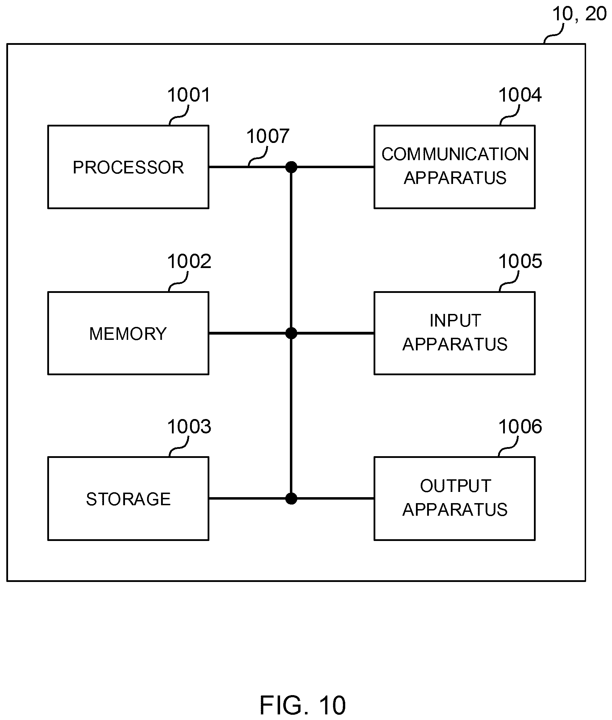

For example, a radio base station, a user terminal, and so on according to the present embodiment may function as a computer that executes the processes of the radio communication method of the present invention. FIG. 10 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control at least one of communication via the communication apparatus 1004 and reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

The apparatuses shown in FIG. 10 are connected by the bus 1007 that is provided for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain.

A radio frame, a subframe, a slot, a mini-slot, and a symbol all express time units in signal transmission. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms.

Here, a TTI refers to the minimum time unit of scheduling in radio communication, for example. For example, in LTE systems, a radio base station schedules the allocation of radio resources (such as a frequency bandwidth and/or transmission power that are available for each user terminal) for the user terminal in TTI units. Note that the definition of TTIs is not limited to this. TTIs may be transmission time units for channel-encoded data packets (transport blocks), or may be the unit of processing in scheduling, link adaptation, and/or the like. Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," or the like.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that the RB may be referred to as a physical resource block (PRB (Physical RB)), a PRB pair, an RB pair, and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices. Further, formulas using these parameters and so on may be different from those explicitly disclosed in this specification.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be carried out explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via transmission media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of transmission media.

The terms "system" and "network" used in this specification can be used interchangeably.

In this specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In this specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, "uplink" and/or "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Specific actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. In the use in this specification, two elements may be considered "connected" or "coupled" to each other by using one or more electrical wires, cables and/or printed electrical connections, and, as some non-limiting and non-inclusive examples, by using electromagnetic energy such as electromagnetic energy having wavelengths in radio frequency regions, microwave regions and (both visible and invisible) optical regions.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the scope of the present invention defined by the recitations of claims. Consequently, the description in this specification is provided only for the purpose of explaining examples, and should by no means be construed to limit the present invention in any way.

## Claims

1. A terminal (20) comprising:
a receiving section (203) configured to receive a downlink control information, DCI, transmitted on a first carrier on which at least downlink, DL, transmission is performed; and
a control section (401) configured to control, based on an indication information included in the DCI, UL signal transmission on a second carrier on which supplementary uplink, SUL, transmission is performed,
wherein only UL transmission is performed on the second carrier, the terminal being **characterized by**:
a first DCI including no carrier indicator field, CIF, or a second DCI including the CIF with a limited configuration target is supported as the DCI, and
a CIF included in the second DCI indicating UL transmission using the first carrier and a CIF included in the second DCI indicating UL transmission using the second carrier are configured separately.

2. The terminal according to claim 1, wherein the control section is configured to control not to perform transmission of uplink control information, UCI, using the second carrier.

3. A radio communication method for a terminal (20), comprising:
receiving a downlink control information, DCI, transmitted on a first carrier on which at least downlink, DL, transmission is performed; and
controlling, based on an indication information included in the DCI, UL signal transmission on a second carrier on which supplementary uplink, SUL, transmission is performed,
wherein only UL transmission is performed on the second carrier,
the radio communication method being **characterized by**:
a first DCI including no carrier indicator field, CIF, or a second DCI including the CIF with a limited configuration target is supported as the DCI, and
a CIF included in the second DCI indicating UL transmission using the first carrier and a CIF included in the second DCI indicating UL transmission using the second carrier are configured separately.

4. A base station (10) comprising:
a transmitting section (103) configured to transmit a downlink control information, DCI, on a first carrier on which at least downlink, DL, transmission is performed; and
a control section (301) configured to control, on a second carrier on which supplementary uplink, SUL, transmission is performed, reception of a UL signal that is transmitted based on an indication information included in the DCI,
wherein only UL transmission is performed on the second carrier, the base station being **characterized by**:
a first DCI including no carrier indicator field, CIF, or a second DCI including the CIF with a limited configuration target is supported as the DCI, and
a CIF included in the second DCI indicating UL transmission using the first carrier and a CIF included in the second DCI indicating UL transmission using the second carrier are configured separately.

5. A system comprising a base station (10) according to claim 4 and a terminal (20) according to claim 1 or **2.**

## Patentansprüche

1. Endgerät (20), umfassend:
einen Empfangsabschnitt (203), der zum Empfangen von Downlink-Steuerinformationen, DCI, ausgebildet ist, die auf einem ersten Träger übertragen werden, auf dem mindestens Downlink-, DL-, Übertragung durchgeführt wird; und
einen Steuerabschnitt (401), der ausgebildet ist, basierend auf einer in der DCI enthaltenen Anzeigeinformation eine UL-Signalübertragung auf einem zweiten Träger zu steuern, auf dem eine zusätzliche Aufwärtsverbindungs-, SUL-, Übertragung durchgeführt wird,
wobei auf dem zweiten Träger nur Aufwärtsverbindungs-, UL-, Übertragung durchgeführt wird, wobei das Endgerät **gekennzeichnet ist durch**:
eine erste DCI, die kein Trägerindikatorfeld, CIF, einschließt, oder eine zweite DCI, die das CIF mit einem begrenzten Konfigurationsziel einschließt, als die DCI unterstützt wird, und
ein in der zweiten DCI enthaltenes CIF, das eine UL-Übertragung unter Verwendung des ersten Trägers anzeigt, und ein in der zweiten DCI enthaltenes CIF, das eine UL-Übertragung unter Verwendung des zweiten Trägers anzeigt, getrennt ausgebildet sind.

2. Endgerät nach Anspruch 1, wobei der Steuerabschnitt ausgebildet ist, zu steuern, keine Übertragung von Aufwärtsverbindungssteuerinformationen, UCI, unter Verwendung des zweiten Trägers durchzuführen.

3. Funkkommunikationsverfahren für ein Endgerät (20), umfassend:
Empfangen von Downlink-Steuerinformationen, DCI, die auf einem ersten Träger übertragen werden, auf dem mindestens Downlink-, DL-, Übertragung durchgeführt wird; und
Steuern, basierend auf einer in der DCI enthaltenen Anzeigeinformation, einer UL-Signalübertragung auf einem zweiten Träger, auf dem eine zusätzliche Aufwärtsverbindungs-, SUL-, Übertragung durchgeführt wird,
wobei auf dem zweiten Träger nur UL-Übertragung durchgeführt wird,
wobei das Funkkommunikationsverfahren **gekennzeichnet ist durch**:
eine erste DCI, die kein Trägerindikatorfeld, CIF, einschließt, oder eine zweite DCI, die das CIF mit einem begrenzten Konfigurationsziel einschließt, als die DCI unterstützt wird, und
ein in der zweiten DCI enthaltenes CIF, das eine UL-Übertragung unter Verwendung des ersten Trägers anzeigt, und ein in der zweiten DCI enthaltenes CIF, das eine UL-Übertragung unter Verwendung des zweiten Trägers anzeigt, getrennt ausgebildet sind.

4. Basisstation (10), umfassend:
einen Übertragungsabschnitt (103), der ausgebildet ist zum Übertragen von Downlink-Steuerinformationen, DCI, auf einem ersten Träger, auf dem mindestens Downlink-, DL-, Übertragung durchgeführt wird; und
einen Steuerabschnitt (301), der ausgebildet ist, auf einem zweiten Träger, auf dem eine zusätzliche Aufwärtsverbindungs-, SUL-, Übertragung durchgeführt wird, den Empfang eines UL-Signals zu steuern, das basierend auf einer in der DCI enthaltenen Anzeigeinformation übertragen wird,
wobei auf dem zweiten Träger nur UL-Übertragung durchgeführt wird, wobei die Basisstation **gekennzeichnet ist durch**:
eine erste DCI, die kein Trägerindikatorfeld, CIF, einschließt, oder eine zweite DCI, die das CIF mit einem begrenzten Konfigurationsziel einschließt, als die DCI unterstützt wird, und
ein in der zweiten DCI enthaltenes CIF, das eine UL-Übertragung unter Verwendung des ersten Trägers anzeigt, und ein in der zweiten DCI enthaltenes CIF, das eine UL-Übertragung unter Verwendung des zweiten Trägers anzeigt, getrennt ausgebildet sind.

5. System, umfassend eine Basisstation (10) nach Anspruch 4 und ein Endgerät (20) nach Anspruch 1 oder 2.

## Revendications

1. Terminal (20) comprenant :
une section (203) de réception configurée pour recevoir une information de commande de liaison descendante, DCI, transmise sur une première porteuse sur laquelle au moins une transmission de liaison descendante, DL, est réalisée ; et
une section (401) de commande configurée pour commander, sur la base d'une information d'indication incluse dans la DCI, la transmission d'un signal de liaison montante, UL, sur une seconde porteuse sur laquelle une transmission de liaison montante supplémentaire, SUL, est réalisée,
dans lequel seule une transmission UL est réalisée sur la seconde porteuse, le terminal étant **caractérisé en ce que** :
une première DCI n'incluant pas de champ d'indication de porteuse, CIF, ou une seconde DCI incluant le CIF avec une cible de configuration limitée, est prise en charge en tant que DCI, et
un CIF inclus dans la seconde DCI indiquant une transmission UL en utilisant la première porteuse et un CIF inclus dans la seconde DCI indiquant une transmission UL en utilisant la seconde porteuse sont configurés séparément.

2. Terminal selon la revendication 1, dans lequel la section de commande est configurée pour commander la non-réalisation de la transmission d'informations de commande de liaison montante, UCI, en utilisant la seconde porteuse.

3. Procédé de communication radio pour un terminal (20), comprenant :
la réception d'une information de commande de liaison descendante, DCI, transmise sur une première porteuse sur laquelle au moins une transmission de liaison descendante, DL, est réalisée ; et
la commande, sur la base d'une information d'indication incluse dans la DCI, de la transmission d'un signal de liaison montante, UL, sur une seconde porteuse sur laquelle une transmission de liaison montante supplémentaire, SUL, est réalisée,
dans lequel seule une transmission UL est réalisée sur la seconde porteuse,
le procédé de communication radio étant **caractérisé en ce que** :
une première DCI n'incluant pas de champ d'indication de porteuse, CIF, ou une seconde DCI incluant le CIF avec une cible de configuration limitée, est prise en charge en tant que DCI, et
un CIF inclus dans la seconde DCI indiquant une transmission UL en utilisant la première porteuse et un CIF inclus dans la seconde DCI indiquant une transmission UL en utilisant la seconde porteuse sont configurés séparément.

4. Station (10) de base comprenant :
une section (103) de transmission configurée pour transmettre une information de commande de liaison descendante, DCI, sur une première porteuse sur laquelle au moins une transmission de liaison descendante, DL, est réalisée ; et
une section (301) de commande configurée pour commander, sur une seconde porteuse sur laquelle une transmission de liaison montante supplémentaire, SUL, est réalisée, la réception d'un signal UL qui est transmis sur la base d'une information d'indication incluse dans la DCI,
dans laquelle seule une transmission UL est réalisée sur la seconde porteuse, la station de base étant **caractérisée en ce que** :
une première DCI n'incluant pas de champ d'indication de porteuse, CIF, ou une seconde DCI incluant le CIF avec une cible de configuration limitée, est prise en charge en tant que DCI, et
un CIF inclus dans la seconde DCI indiquant une transmission UL en utilisant la première porteuse et un CIF inclus dans la seconde DCI indiquant une transmission UL en utilisant la seconde porteuse sont configurés séparément.

5. Système comprenant une station (10) de base selon la revendication 4 et un terminal (20) selon la revendication 1 ou la revendication 2.
